(19) Europäisches Patentamt / European Patent Office / Office européen des brevets

(11) **EP 4 476 936 B1**

(12) **EUROPEAN PATENT SPECIFICATION**

(45) Date of publication and mention
of the grant of the patent:
**29.04.2026 Bulletin 2026/18**

(21) Application number: **22926244.9**

(22) Date of filing: **08.02.2022**

(51) International Patent Classification (IPC):
*H04B 7/185* (2006.01)   *G06N 3/047* (2023.01)
*G06N 3/044* (2023.01)   *G06N 3/098* (2023.01)
*H04W 36/00* (2009.01)   *H04W 36/36* (2009.01)

(52) Cooperative Patent Classification (CPC):
**H04W 36/00835; G06N 3/044; G06N 3/047;
G06N 3/098; H04B 7/18513; H04B 7/18541;
H04W 36/362**

(86) International application number:
**PCT/SE2022/050135**

(87) International publication number:
**WO 2023/153962 (17.08.2023 Gazette 2023/33)**

(54) **USING MACHINE LEARNING MODELS TO GENERATE CONNECTIVITY GRAPHS BETWEEN DEVICE AND NETWORK NODES FOR USE IN CONDITIONAL HANDOVER PROCEDURES**

VERWENDUNG VON MASCHINENLERNMODELLEN ZUR ERZEUGUNG VON KONNEKTIVITÄTSGRAPHEN ZWISCHEN VORRICHTUNG UND NETZWERKKNOTEN ZUR VERWENDUNG IN BEDINGTEN ÜBERGABEVERFAHREN

UTILISATION DE MODÈLES D'APPRENTISSAGE AUTOMATIQUE POUR GÉNÉRER DES GRAPHES DE CONNECTIVITÉ ENTRE UN DISPOSITIF ET DES NOEUDS DE RÉSEAU DESTINÉS À ÊTRE UTILISÉS DANS DES PROCÉDURES DE TRANSFERT CONDITIONNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.12.2024 Bulletin 2024/51**

(73) Proprietor: **Telefonaktiebolaget LM Ericsson
(publ)
164 83 Stockholm (SE)**

(72) Inventors:
• **ICKIN, Selim
182 50 Danderyd (SE)**
• **TAGHIA, Jalil
113 56 Stockholm (SE)**

(74) Representative: **Ericsson
Patent Development
Torshamnsgatan 21-23
164 80 Stockholm (SE)**

(56) References cited:
**WO-A1-2020/087432     WO-A1-2021/118418
WO-A1-2021/219201     WO-A1-2022/006808
WO-A1-2022/006814     WO-A1-2022/013090
WO-A1-2022/021078     CN-A- 112 823 544**

• **AZARI M. MAHDI ET AL:** "Evolution of Non-Terrestrial Networks From 5G to 6G: A Survey", vol. 24, no. 4, 14 July 2021 (2021-07-14), pages 2633 - 2672, XP093030679, Retrieved from the Internet <URL:https://arxiv.org/pdf/2107.06881v1.pdf> DOI: 10.1109/COMST.2022.3199901

EP 4 476 936 B1

**Description**

TECHNICAL FIELD

The field relates generally to using distributed machine learning models to improve conditional handover (CHO) procedures. More specifically, the field relates to generating connectivity graphs using distributed machine learning (ML) models for use in CHO procedures. Disclosed are aspects related to generating connectivity graphs between device and network nodes for use in CHO procedures.

BACKGROUND

Machine Learning and Federated Learning

In the past few years, machine learning has led to major breakthroughs in various areas, such as natural language processing, computer vision, speech recognition, and Internet of Things (IoT), with some breakthroughs related to automation and digitalization tasks. Machine learning can also be applied to the field of telecommunications. Most of this success stems from collecting and processing big data in suitable environments. For some applications of machine learning, this process of collecting data can be incredibly privacy invasive. One potential use case is to improve the results of speech recognition and language translation, while another one is to predict the next word typed on a mobile phone to increase the speed and productivity of the person typing. Another potential use case is predicting when a connected device needs to handover from one network to another before the connected device loses connectivity to its current network. In all cases, it would be beneficial to directly train on the same data instead of using data from other sources. This would allow for training a machine learning (ML) model (referred to herein as "model" also) on the same data distribution (i.i.d. - independent and identically distributed) that is also used for making predictions. However, directly collecting such data might not always be feasible owing to privacy concerns. Users may not prefer nor have any interest in sending everything they type to a remote server/cloud.
One recent solution to address this is the introduction of federated learning, a new distributed machine learning approach where the training data does not leave the users' computing device at all. Instead of sharing their data directly, the client computing devices themselves compute weight updates using their locally available data. It is a way of training a model without directly inspecting clients' or users' data on a server node or computing device. Federated learning is a collaborative form of machine learning where the training process is distributed among many users. A server node or computing device has the role of coordinating between models, but most of the work is not performed by a central entity anymore but by a federation of users or clients.
After the model is initialized in every user or client computing device, a certain number of devices are randomly selected to improve the model. Each sampled user or client computing device receives the current model from the server node or computing device and uses its locally available data to compute a model update. All these updates are sent back to the server node or computing device where they are averaged, weighted by the number of training examples that the clients used. The server node or computing device then applies this update to the model, typically by using some form of gradient descent.
Current machine learning approaches require the availability of large datasets, which are usually created by collecting huge amounts of data from user or client computing devices. Federated learning is a more flexible technique that allows training a model without directly seeing the data. Although the machine learning process is used in a distributed way, federated learning is quite different to the way conventional machine learning is used in data centers. The local data used in federated learning may not have the same guarantees about data distributions as in traditional machine learning processes, and communication is oftentimes slow and unstable between the local users or client computing devices and the server node or computing device. To be able to perform federated learning efficiently, proper optimization processes need to be adapted within each user machine or computing device. For instance, different telecommunications operators will each generate huge alarm datasets and relevant features. In this situation, there may be a good list of false alarms compared to the list of true alarms. For such a machine learning classification task, typically, the dataset of all operators in a central hub/repository would be required beforehand. This is required since different operators will encompass a variety of features, and the resultant model will learn their characteristics. However, this scenario is extremely impractical in real-time since it requires multiple regulatory and geographical permissions; and, moreover, it is extremely privacy-invasive for the operators. The operators often will not want to share their customers' data out of their premises. Hence, distribute machine learning, such as federated learning, may provide a suitable alternative that can be leveraged to greater benefit in such circumstances.

Handover (HO) Mechanism

Handover occurs when a connected device (such as a cell phone) or user equipment (UE) switches its connection from one network such as a cell tower or other terrestrial network (TN) to another such as a non-terrestrial network (NTN) such as a satellite. In a stationary context, the HO decision might not be tricky. However, if both the serving cell and the UE is non-stationary and moving at high speeds (such as a satellite), forecasting and then optimizing a set of HO parameters in advance is critical to the success of HO.

There is a tradeoff for UE being connected to non-terrestrial network (NTN) or terrestrial network (TN). On one hand, the cost of UE being connected to TN is less, for example less UE energy consumption, as compared to being connected to NTN. On the other hand, once hand-in (NTN->TN HO) happens due to short sighted decisions especially in rural areas, there is a risk for UE losing connectivity to TN after some time in the case of high mobility due to TN's limited coverage area as compared to NTN. In addition, there is a risk that the TN network gets overloaded or might serve UE with poor quality of experience (QoE) given a particular service (such as broadband video streaming) at particular time of the day (e.g., busy hour). This then yields a tradeoff between the NTN's serving cost and end-user QoE.

Therefore, there exists a need for a UE being connected to NTN, where the UE should have a smart and pro-active HO control mechanism that decides whether or not to handover to TN based on its forecasted trajectory and UE context in the future, given that connecting back from TN to NTN would be hard as the connection of UE to the satellite was lost before. When to hand-in (NTN to TN) should be decided carefully with good forecasting of the future UE and network state in advance.

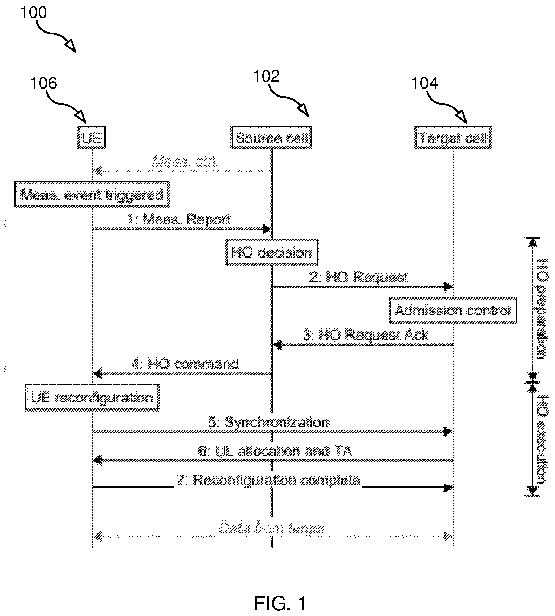

FIG. 1 is a sequence diagram, from E. Juan, M. Lauridsen, J. Wigard and P. E. Mogensen, "5G New Radio Mobility Performance in LEO-based Non-Terrestrial Networks," 2020 IEEE Globecom Workshops (GC Wkshps, 2020, pp. 1-6), illustrating a conventional handover (HO) procedure 100 between a source 102 and target cell 104. The existing 5G new radio handover (HO) algorithm fails to provide seamless connectivity in low earth orbit based satellites (600km-1200km). The major reason for this is that the handover takes too long. The reason for long handover is that the propagation distance is orders of magnitude longer than the cell size hindering the user equipment (UE) 106 measurement. High propagation distance causes delay in control messages and outdated UE 106 measurements. The high distance (coverage area) also yields low signal variation between the cell center and the cell edge. There is also a high downlink interference from adjacent satellite beams. There is fast signal fading as a consequence of the high speed cell mobility and the narrow antenna pattern. This is in contrast to the omni-antennas in terrestrial network nodes. For non-terrestrial network (NTN) UE's, UE antenna are omni-directional for terrestrial network (TN), and unidirectional and narrow for NTN (directed to each beam in NTN). The HO time depends on the fact that if the HO is occurring between the cells of the same satellite or amongst different satellites. For example, HO decision is given if RSRP from one cell is HOM dB better than the other cell for TTT seconds. Conditional Handover (CHO) Mechanism

In earlier releases than 5G, the handover (HO) command was triggered after a user equipment (UE) reports an A3 event indicating that a UE reference signal received power (RSRP) on the serving cell is getting worse than the UE RSRP at a neighboring cell. However, it is sometimes too late to HO after sending the report since the quality can be too bad to send the report or the HO commands. In 5G new radio (NR), there are ways to cope with late HO that eventually causes radio link failure (RLF) and HO failure such as conditional HO (TS 38.331, TS 38.423). In conditional HO, the handover command is sent from the network to the UE in advance (based on previous measurement reports). Along with the early HO command, a list of candidate neighboring cell names are also sent. Both HO command and the list of candidate neighboring cells are stored in the UE. The UE does not perform HO immediately, but triggers the HO command only when the certain criteria is met (such as threshold delta between source and any target cell). The candidate neighboring cells received from the network should also be neither too large(otherwise might unnecessarily allocate resources in other cells, especially high load ones, during HO preparation), nor too small(not to reduce the risk of coverage and RLF).

Therefore, there exists a need to combine all the features in a machine-learning (ML) model so that a right planning for the HO control can be given in advance since there are massive number of input parameters and conditions (i.e., priors) to consider in the evaluation which might be hard to accomplish with rule based systems. There further exists a need to incorporate federated or distributed learning into this machine-learning model.

WO 2021/118418 A1 discloses a method of mobility prediction and machine learning applied to radio access networks, wherein a prediction model runs in the UE side for predicting target network nodes to be used in conditional HO.

The invention is defined in the appended claims.

SUMMARY

The method and device disclosed herein is not a replacement for existing conditional HO mechanism, but rather to improve it with more holistic view (obtained via collaborative learning with considerations of much more attributes and dimensions) and help CHO (conditional handover) to associate with optimum decision thresholds. This is especially important since in the CHO, there is a tradeoff between energy consumption and HO failure. The current implementation of CHO is mainly to reduce the risk of HO failure with the cost of allocating and preparing more target cells for the handover, and it might be that the suboptimal preparations in advance might allocate unnecessary resources such as increased energy consumption and increased QoS resource allocation on the target cells.

The HO alternatives are sent from TN to UE in the form of a graph representation, where the nodes in the graph are alternative network nodes where the HO can be made to, and the link between the nodes indicate the ranking with respect to the estimated overall quality if the HO is made to the corresponding target network.

The ML based collaborative method disclosed herein reduces the NTN HO mechanism decision with long and short term predictions. The goal is to minimize the UE's handover failure that occurs during HO from/to NTN.

The method disclosed herein includes cascaded/hierarchically structured KPI and UE context prediction models. The output of the final prediction model is fed into a Graph Neural Network to generate and recommend the graph structure given the predicted state of the network. The generated graph represents the connectivity of UE to the network which would yield minimum HO failure to/from NTN network and reduce cost by extending the connectivity time of the UE to TN if the UE is not expected to need NTN. As the structure of the generated graph can be similar in different time and location, the method disclosed herein includes a collaborative machine learning method on top of it to enable the generative and the prediction models to share weights in between each other. This necessitates a grouping of similar models before each model joins the training.

In some aspects disclosed herein, the goal is to generate the best connectivity graph between the UE and the network provider nodes (NTN and TN) to minimize the energy consumption and handovers and to maximize the objective QoE (derived from pre-trained model). The method and device disclosed herein considers the existing HO mechanisms such as conditional HO (CHO), and enhances it with a data-driven decision.

The method and device disclosed herein provides several advantages, including but not limited to: preventing the UE from going into a disconnected state due to handover failure or radio link failure; preventing the UE from being out of coverage by a proactive handover decision; reducing the cost of serving by minimizing the serving time from NTN; and reducing the energy consumption by reducing the number of handovers.

Internet of Things (IoT) Connectivity Management Use Case

In some cases an IoT device drops connectivity from a source cell before reestablishing on a new base station target cell; followed by the fact the device cannot establish a connectivity with the target cell. In the worst case, the scenario the IoT device completely loses connectivity and cannot connect, and is pushed into a dead-lock. In UE's this is not a problem since the human user can initiate a restart or can move close to one base station when the phenomena is experienced to trigger reconnection. But for remote stationary, IoT devices it is harder to do unless there is an auto-reboot mechanism (watch-dog timer) implementation in place.

The factors such as environmental, the traffic load of the candidate base stations are critical to the HO decision as they cause high interference. One example is the foliage, e.g., IoT sensors installed within a large forest area for early fire detection. Another example could be the geographical areas with river and large water damps, as well as heavy rainfall scenarios in a monsoon season climate. These factors can create additional interference that impacts measurement reports observed in the UE's in the area that might eventually cause HO failures.

In a first aspect according to the invention, a method for a distributed machine learning (ML) assisted conditional handover (CHO) procedure for a connected device is provided. The method comprises receiving, by the connected device, one or more measurement configurations from a source station, wherein the source station is a non-terrestrial network (NTN); transmitting, by the connected device, one or more measurement reports to the source station; receiving and storing, by the connected device, one or more CHO commands from the source station, the one or more CHO commands having at least one triggering condition for CHO to one or more candidate target cells, wherein the one or more candidate target cells are terrestrial networks (TNs), wherein the one or more CHO commands are determined by inputting the one or more measurement reports into a distributed ML-generated reference model; and evaluating, by the connected device, whether the at least one triggering condition in any of the one or more CHO commands is fulfilled, wherein the distributed ML-generated reference model is generated by: collecting data for a set of device and network node agents, wherein the collected data include attribute information for at least one connected device used for training, attribute information for at least one non-terrestrial network (NTN), and attribute information for at least one terrestrial network (TN); building, using the attribute information from the collected data, dependency graphs representing interaction relationships between the set of device and network node agents; constructing, using the dependency graphs, graph-based ML models representing profiles for the set of device and network node agents, wherein constructing the graph-based ML models includes generating connectivity between the set of device and network node agents; and training and validating the graph-based ML models using the generated connectivity for the set of device and network node agents.

In some aspects according to the invention, the method further comprises executing, by the connected device, a decision for handover based on the evaluation, wherein the connected device executes the handover if the one or more CHO commands is fulfilled and does not execute the handover if the one or more CHO commands is not fulfilled.

In some aspects according to the invention, the data for the set of device and network node agents comprises one or more of: the cost of the at least one training device being connected to the at least one NTN; the cost of the at least one training device being connected to the at least one TN; the service and application usage time by the at least one training device within a next time interval (T); the throughput and latency requirements of a predicted service in the at least one training device; and the conditions of at least one of the networks available to the at least one training device.

In some aspects according to the invention, the attribute information for the cost of the at least one connected device for training being connected to the at least one NTN comprises one or more of: the previous cost of service for all available NTNs; the time when the previous service occurred; and the total power consumption of the at least one connected device for training and the at least one NTN during service.

In some aspects according to the invention, the attribute information for the cost of the at least one connected device for training being connected to the at least one TN comprises one or more of: the previous cost of service for all available TNs; the time when the previous service occurred; and the total power consumption of the at least one connected device for training and the at least one TN during service.

In some aspects according to the invention, the attribute information for the service and application usage time by the at least connected device for training within the next time interval (T) comprises one or more of: the type of service being used in the at least one training device; the time of usage; and the historical behavior of users of the at least one training device.

In some aspects according to the invention, the attribute information for the throughput and latency requirements of the predicted service in the at least one connected device for training comprises one or more of: the location of the at least one connected device for training; the speed at which the at least connected device for training is moving; and the historical mobility trajectory of the at least connected device for training.

In some aspects according to the invention, the attribute information for the conditions of the at least one of the networks available to the at least connected device for training comprises one or more of: the proximity of all potential satellites in the at least one network; the available radio network deployment topology from the at least one network's knowledge base; the propagation conditions of the at least one network; the downlink signal-to-interference-plus-noise ratio as a function of time for the at least one network; the system load on the at least one network; the number of radio link failure (RLF) events in the at least one network; the historical and current handover failure (HOF) events in the at least one network; the historical and current ping-pong rate in the at least one network; the historical average time in outage of the at least one network; the predicted coverage of the at least one network's TN's per time slot; the historical availability of TNs and NTNs in the at least one network; the availability of TNs and NTNs in the at least one network in the past per timeslot at a given geo-location and predicted availability in a plurality of future time intervals; and the current and previous TN names and NTN names and elevations in the at least one network.

In some aspects according to the invention, the collected data further includes data collected by a collaborative machine learning method. In some aspects, the collaborative machine learning method is a federated learning method.

In some aspects according to the invention, the graph-based ML models are generated according to:

$$G_i(A_i, F_i)$$

where:

$A_i$ refers to an adjacency matrix (nxn), in the case of n nodes,
where $n \in$ {NTN, TN, UE}, and
$F_i$ is the feature vector for graph i.

In some aspects according to the invention, the connected device is a user equipment (UE).

In some aspects according to the invention, the at least one or more CHO commands includes at least one of: a leaving condition, a target cell identity (ID), a life timer, a CHO command priority, and a CHO command ID.

According to a second aspect according to the invention, a connected device is provided, the device comprising processing circuitry; and a memory, said memory containing instructions executable by said processing circuitry, whereby said connected device is operative to perform the method of any one of the previously disclosed aspects.

According to a third aspect according to the invention, a connected device is provided, wherein the connected device is adapted to perform the method of any one of the previously disclosed aspects, wherein the connected device is a user equipment (UE), or wherein the connected device is any device selected from a group consisting of: a sensor, a ground vehicle, an aircraft, or a watercraft, wherein the selected device has connectivity capabilities to both terrestrial and non-terrestrial networks.

According to a third aspect not being part of the invention, a computer program comprising instructions for adapting an apparatus to perform the method of any one of the previously disclosed aspects is provided.

According to a fourth aspect not being part of the invention, a carrier containing the computer program previously disclosed, wherein the carrier is one of an electronic signal, optical signal, radio signal, or compute readable storage medium, is provided.

In some aspects not being part of the invention, the graph-based ML models are graph neural networks.

BRIEF DESCRIPTION OF THE DRAWINGS

The accompanying drawings, which are incorporated herein and form part of the specification, illustrate various aspects.

FIG. 1 is a sequence diagram illustrating a conventional handover (HO) procedure for 5G New Radio (NR) communications in LEO-based Non-Terrestrial Networks (NTN).

FIG. 2 is a block diagram illustrating a method for a machine learning (ML) assisted conditional handover (CHO) procedure for a connected device as disclosed in some aspects.

FIG. 3 is a block diagram illustrating a computer-implemented method for building a machine learning (ML) model for assisting in conditional handover (CHO) procedures as disclosed in some aspects.

FIG. 4 is a block diagram illustrating a sequence of prediction models as disclosed in some aspects.

FIG. 5 is a table illustrating a list of features from a non-terrestrial network (NTN), terrestrial network (TN), and a user equipment (UE) as disclosed in some aspects.

FIG. 6 illustrates a graph structure between NTN, TN, and UE as disclosed in some aspects.

FIG. 7 is a sequence of graphs and tables illustrating node and edge generation as disclosed in some aspects.

FIG. 8 is a graph illustrating a time varying graph structure of network elements as disclosed in some aspects.

FIG. 9 is a sequence diagram illustrating the generation of a prediction and connectivity graph before a CHO request is initiated as disclosed in some aspects.

FIG. 10 is a sequence diagram illustrating packet forwarding prior to the execution of a HO command as disclosed in some aspects as disclosed in some aspects.

FIG. 11 is a sequence diagram illustrating the generation of the connectivity graph using a selected federation model as disclosed in some aspects.

FIG. 12 is a sequence diagram illustrating tasks that need to be performed periodically to generate an ML training model as disclosed in some aspects.

FIG. 13 is a block diagram of an apparatus according to some embodiments.

FIG. 14 is a block diagram of an apparatus according to some embodiments.

DETAILED DESCRIPTION

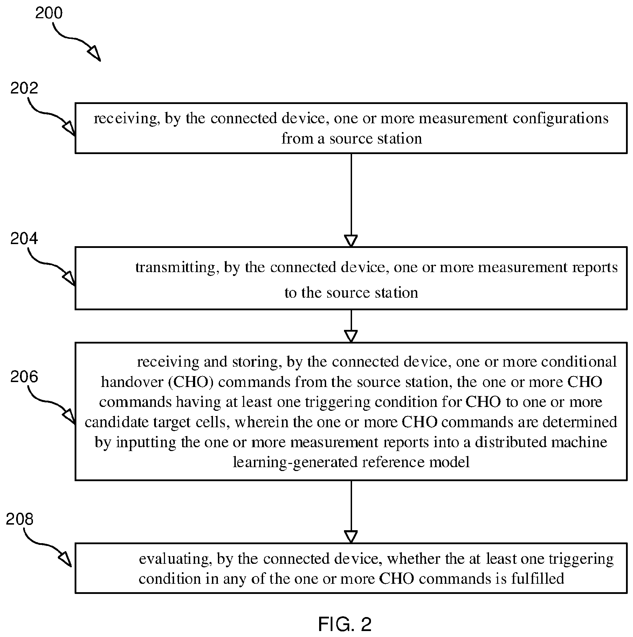

FIG. 2 is a block diagram illustrating a method 200 for a distributed machine learning (ML) assisted conditional handover (CHO) procedure for a connected device. In some aspects, the method 200 comprises a first step 202 of receiving, by the connected device, one or more measurement configurations from a source station. In some aspects, this is a non-terrestrial network. In others, this may be a terrestrial network. In some aspects, the method 200 comprises a second step 204 of transmitting, by the connected device, one or more measurement reports to the source station. In some aspects, the method 200 comprises a third step 206 of receiving and storing, by the connected device, one or more conditional handover (CHO) commands from the source station, the one or more CHO commands having at least one triggering condition for CHO to one or more candidate target cells, wherein the one or more CHO commands are determined by inputting the one or more measurement reports into a machine learning-generated reference model. In some aspects, the method 200 further comprises evaluating, by the connected device, whether the at least one triggering condition in any of the one or more CHO commands is fulfilled.

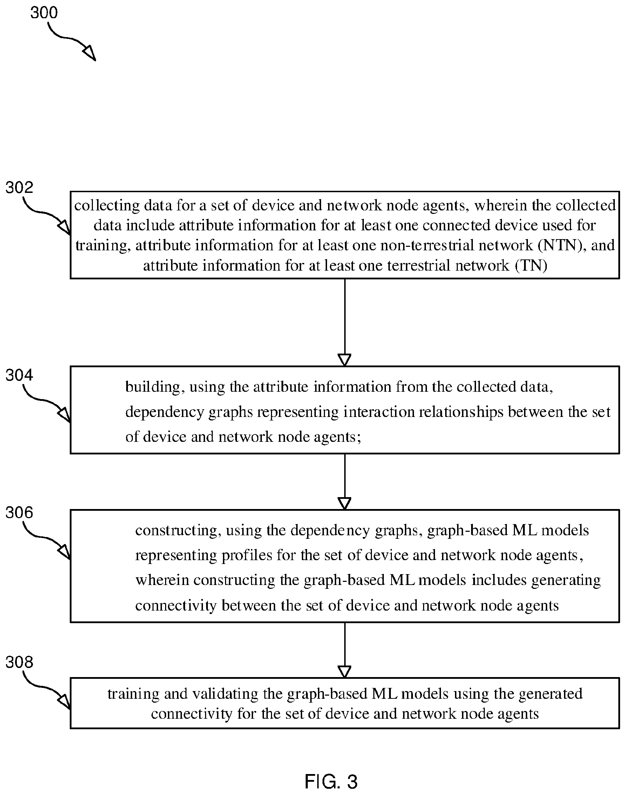

FIG. 3 is a block diagram illustrating a method 300 for generating a distributed machine-learning (ML) reference model. In some aspects according to the invention, the first step 302 of the method 300 comprises collecting data for a set of device and network node agents. In some aspects, the collected data include attribute information for at least one connected device used for training, attribute information for at least one non-terrestrial network (NTN), and attribute information for at least one terrestrial network (TN). In other aspects according to the invention, the second step 304 comprises building, using the attribute information from the collected data, dependency graphs representing interaction relationships between the set of device and network node agents. In other aspects according to the invention, the third step 306 comprises constructing, using the dependency graphs, graph-based ML models representing profiles for the set of device and network node agents, wherein constructing the graph-based ML models includes generating connectivity between the set of device and network node agents. In other aspects according to the invention, the fourth step 308 comprises training and validating the graph-based ML models using the generated connectivity for the set of device and network node agents.

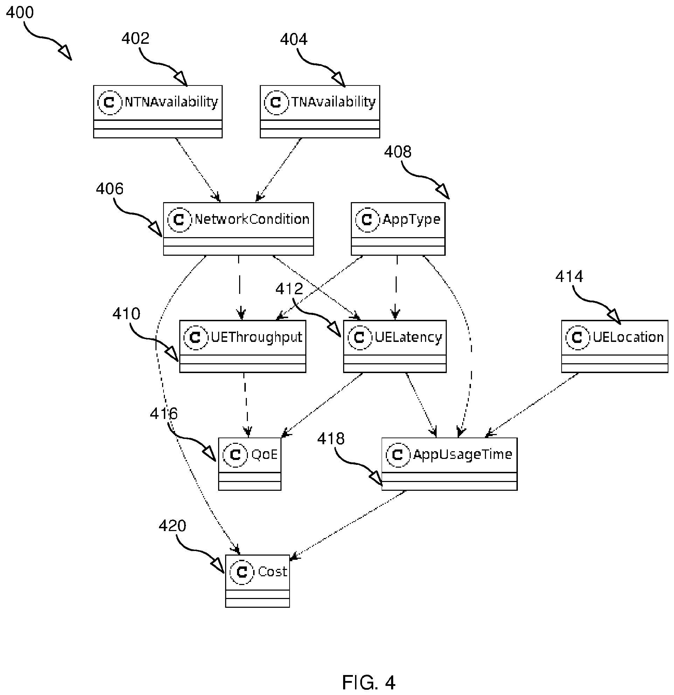

FIG. 4 illustrates a connectivity graph 400 for a set of device and network node agents. The connectivity graph 400 indicates sequence relationships between the set of device and network node agents. In some aspects, the availability of non-terrestrial networks (NTNs) 402 and the availability of terrestrial networks (TNs) 404 sequences into the condition of the network 406. Furthermore, in some aspects, the condition of the network 406 sequences into the UE throughput 410. In other aspects, the type of application being used by a user equipment (UE) 408 sequences into the throughput of the UE 410, the latency of the UE 412, and the app usage time 418. In other aspects, the UE throughput 410 sequences into the quality of experience (QoE) 416. In other aspects, the location of the UE 414 sequences into the usage time of the application. In other aspects, the condition of the network 406 and the usage time of the app sequence into total cost 420. In other aspects, meta data may be used as an input to the set of device and network node agents, such as in instances where the location of the device or network node can be deterministic. In summary, the sequence diagrams shown in the connectivity graph 400 all interact with each other and comprise multiple dependencies.

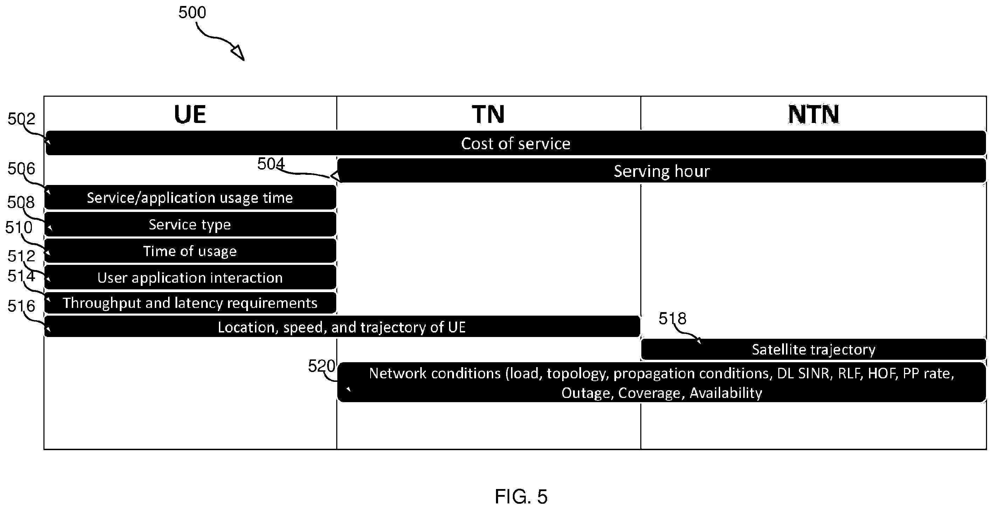

FIG. 5 is a block diagram 500 illustrating a list of features from a user equipment (UE), non-terrestrial network (NTN), and terrestrial network (TN). Some of the features are shared, while others are local. For example, cost of service 502 is shared between all of the elements, while serving hour 504 is shared between only TN and NTN, and service/application usage time 506 is specific to the UE and is not shared. Due to the distributed nature of the feature space in between network nodes and UE, the goal is to train a model such that minimum UE application/service requirement must be met by the underlying KPI's measured in the network nodes. This way, the aspects disclosed herein guarantee that the application service quality remains bounded.

In some aspects, the following relationships exist between the various sequence graphs and features shown in FIGS. 4 and 5:

$$\text{minUE(throughput)} \mid \text{applicationUE} \leq \text{fTN,NTN(SINR, RLF, HOF, PP rate, …)}$$

$$\text{maxUE (latency)} \mid \text{applicationUE} \leq \text{fTN,NTN(SINR, RLF, HOF, PP rate, …)}$$

usage timeUE | applicationUE ≤ Coverage and Availability time NTN, + Coverage and Availability time TN,

min(cost) where cost = f(serving bandwidthUE, serving timeUE, energy consumptiontotal)

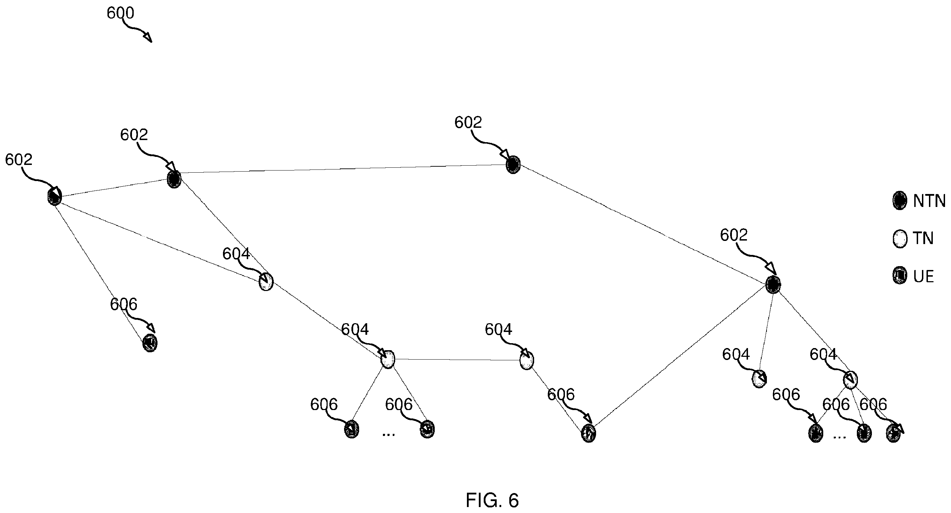

FIG. 6 illustrates a snapshot graph structure 600 obtained between an NTN (nodes 602), a TN (nodes 604), and a UE (nodes 606). Here the network nodes NTN, TN and UE are assumed to be interconnected, hence can be implemented in the form of graph structure. NTN, TN and UE's are individual nodes (n) of local graphs where they have features. The embedded representations of the nodes are then shared in between nodes to train jointly a higher level ML model with graph neural networks (GNN).

In some aspects, an adjacency matrix may be represented by:

$G_i (A_i, F_i)$. $A_i$: adjacency matrix (*nxn*) in the case of n nodes where n∈{NTN, TN, UE}. $F_i$ is the feature vector for graph i.

Decision Making:

Depending on the results of the predicted models and also the UE requirements in time and space, scheduling of UE's to the right network nodes (TN or NTN) can be made using the graph neural network (GNN) algorithm. The ML model needs to be formulated such that the output of the model is the decision to handover or not rather while the intermediate results from predictions are used along the final decision.

Graph Generation:

In some aspects, a topology (connectivity) graph is generated given the conditions. The conditions are a function of multiple models that each consists of various application, radio, network and energy metrics as mentioned previously in this disclosure. The goal here is to generate realistic connectivity graphs between UE and the candidate network nodes that the UE will be connected to. One candidate technique is GraphRNN which is used in drug discovery use cases, for example. The same technique can either build a generation from scratch or complete an incomplete graph (e.g., in the cases the UE is aware of only a subset of nodes but would like to have alternative nodes as well, in that case graph completion can be performed).

In some aspects, the graph is represented by the adjacency matrix previously disclosed, and the space complexity of adjacency matrix is O(n2). Since the candidate network nodes that the graph would involve/generate is not expected to be high (e.g., 4-5 nodes max.), space complexity in our use case might not be a big issue. However, the order of the graph is important which will be constructed with the ranking information, hence the problem might rise with a O(N!) time complexity. Again, due to not large N, this is not foreseen as a major issue. Graph generation includes two main steps: i) obtain the distribution of the dataset; ii) draw samples from the obtained distribution so that the drawn samples will be as similar as the generated samples by a learned model (parameterized by theta). So the goal is to learn the parameters theta of the generative model (e.g., GraphRNN). In some aspects, the goal is to to maximize the likelihood that the aspects disclosed herein can take the average of argmax, hence the role of E. In some aspects, this relationship can be expressed by the formula:

$$Q^* = \text{argmax}Q \ E \ x{\sim}pdata \ \log \ pmodel(X|Q)$$

The training phase comprises many graphs that the model learns from, and in the inference phase it is asked to generate graphs with given conditions. Since the above equation assumes a IID (identical and independent distribution) of data samples, and since some connectivity graph sets might be very different than others in reality based on geographical location and availability and network conditions, this disclosure proposes group federation where the graphs are separated into groups based on their similarity.

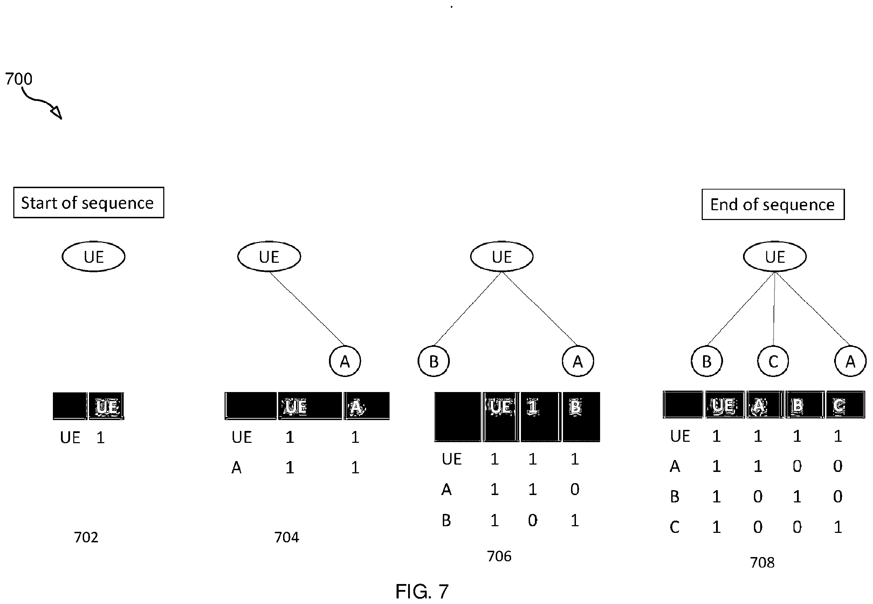

FIG. 7 illustrates a sequence generation 700 for a set of nodes with a UE node and target nodes. The steps comprise adding a node followed by adding an edge until the end of the sequence. Each sequence step is illustrated (702, 704, 706, 708) showing an additional node and edge being added. During the training phase, the order of the nodes is obtained from the ranking (that yields the highest QoE towards lowest overall QoE). If UE is expected to yield the highest QoE by connecting to node 1, the ranking of it will be the highest, then followed by node 3 and then node 2 (according to Figure 7). Eventually what is being minimized is the loss, L as in any ML model optimization:

$$L = - [ \ y1' \ \log y1 + (1-y1^*) \ \log (1-y1) \ ]$$

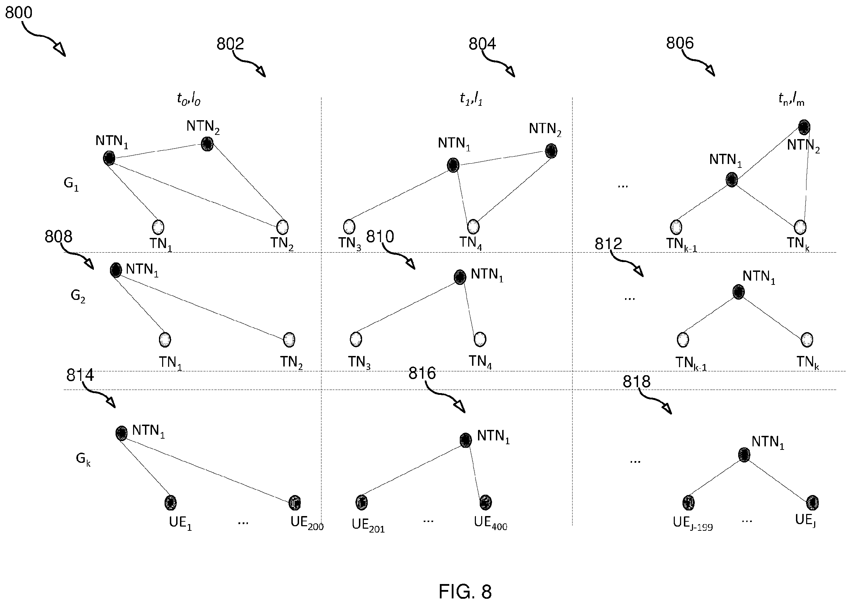

FIG. 8 is a time varying graph structure 800 of network elements, illustrating, as in one aspect, a collaborative machine learning method, such as federated learning, on GraphRNN. The graph structure (the topology) is not static, but rather repetitive between NTN's and TN's as the NTN to TN connection repeats itself periodically depending on the orbit of the satellites, assuming that the TN's have no mobility and rather at fixed positions. This can be seen in the nodes generated for $G_1$ at time 0 and location 0 $(t_0, l_0)$ 802, time 1 and location 1 $(t_1, l_1)$ 804, and time n and location n $(t_n, l_n)$ 806. This is then repeated at $G_2$ for 808, 810, and 812, and continues on until $G_k$, for 814, 816, and 818. Therefore, as the NTN's orbit, they might build similar graph structure (topology) with other TN's as they travel through their orbit at different times hence passing the message learned from temporarily disconnected nodes and UE's enabling collaborative learning. Therefore, the information that is being learned from one graph at time $t_1$ in location $l_1$, can be useful for $t_2$ in location $l_2$, given that the graph structure obtained in $t_1$ and $t_2$ are similar. This means that the learned knowledge (trained graph model) can be reused in other geo-positions.

In another aspect, federated learning is utilized (also in the form of federation of graph models) so that the UE's record historical events are shared by means of local (UE) trained updates so that the HO decision uses experience information on previous handovers. As this information is sensitive, a federated learning method can be implemented where only the learned model weights are shared in between rather than the raw GPS data. Just before UE decides, the local model weights are updated, so that the estimation for the TN location is performed via the federated ML model. If the model does not estimate a nearby TN, the measurement should not be performed hence a NTN-to-NTN handover is initiated instead.

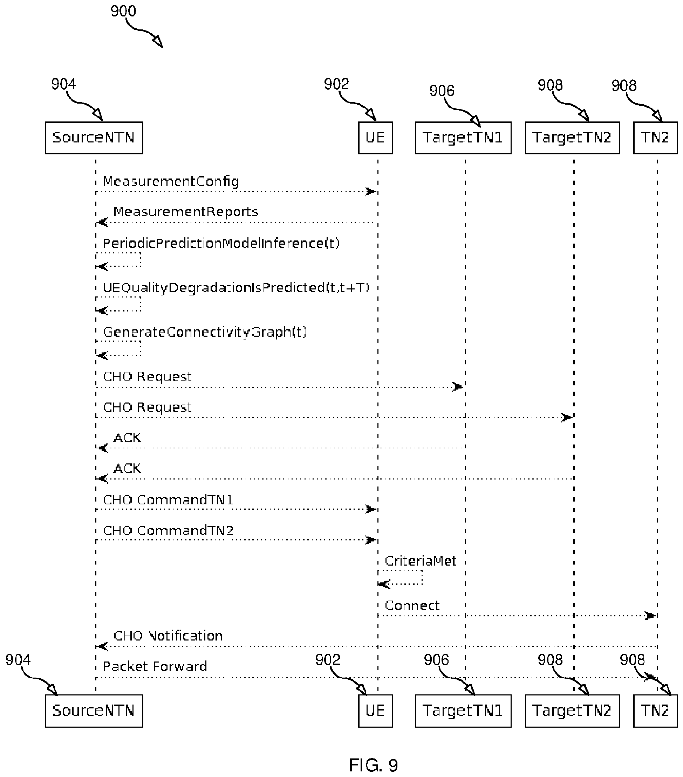

FIGS. 9-13 illustrate sequence diagrams. These sequence diagrams show various aspects of the conditional handover (CHO) procedure as assisted by a distributed ML-generated reference model in accordance with exemplary embodiments disclosed herein.

FIG. 9 illustrates a sequence 900 wherein, in some aspects, a user equipment (UE) 902 receives measurement configurations from a source non-terrestrial network (NTN) 904 and sends measurement reports to the NTN 904. A series of calculations then occurs at the source NTN 904 based on a previously generated connectivity model, including a periodic prediction model inference, a UE quality degradation prediction, and a connectivity graph is generated for the current sequence. The source NTN 904 then sends a conditional handover (CHO) request to a target terrestrial network (TN1) 906 and a target TN2 908, each of which then sends acknowledgement to the source NTN 904. The source NTN 904 then sends CHO commands for the terrestrial networks 906, 908 to the UE 902, which then determines whether the criteria for handover are met by either. The UE then initiates connectivity with a target network, which, in this aspect, is TN2 908. TN2 908 then notifies the Source NTN 904, which forwards the packet to the TN2 908.

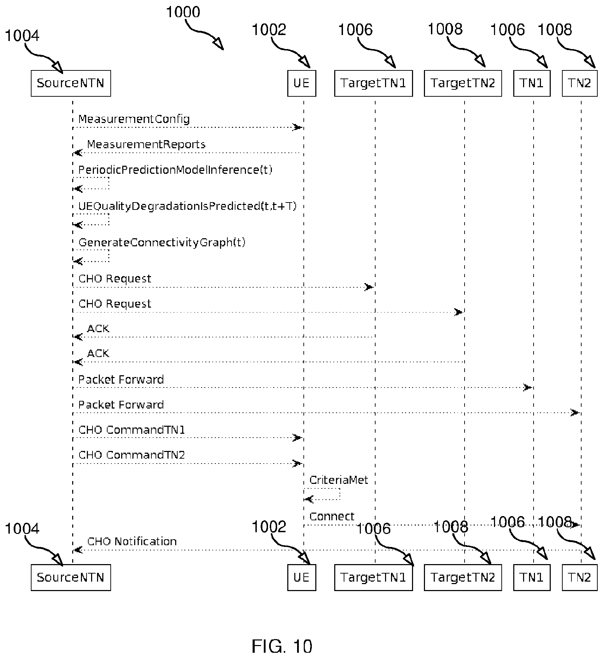

FIG. 10 illustrates a sequence 1000 wherein, in some aspects, a UE 1002 receives measurement configuration from a source NTN 1004 and sends measurement reports to the source NTN 1004. Unlike in the previous aspect shown in FIG. 9, however, the aspect in FIG. 10 shows a packet forwarded before the handover command is executed, which enables seamless handover from source 1004 to destination (in this aspect, TN2 1008). This aspect is useful in the case that there may be a problem delivering the CHO notification. As in FIG. 9, in FIG. 10, according to some aspects, a series of calculations then occurs at the source NTN 1004 based on a previously generated connectivity model, including a periodic prediction model inference, a UE quality degradation prediction, and a connectivity graph is generated for the current sequence. The source NTN 1004 then sends a conditional handover (CHO) request to a target terrestrial network (TN1) 1006 and a target TN2 1008, each of which then sends acknowledgement to the source NTN 1004. The source NTN 1004, as previously discussed, then forwards packets to TN1 1006 and TN2 1008. The source NTN 1004 then sends CHO commands for the terrestrial networks 1006, 1008 to the UE 1002, which then determines whether the criteria for handover are met by either. The UE then initiates connectivity with a target network, which, in this aspect, is TN2 1008. TN2 1008 then notifies the source NTN 1004.

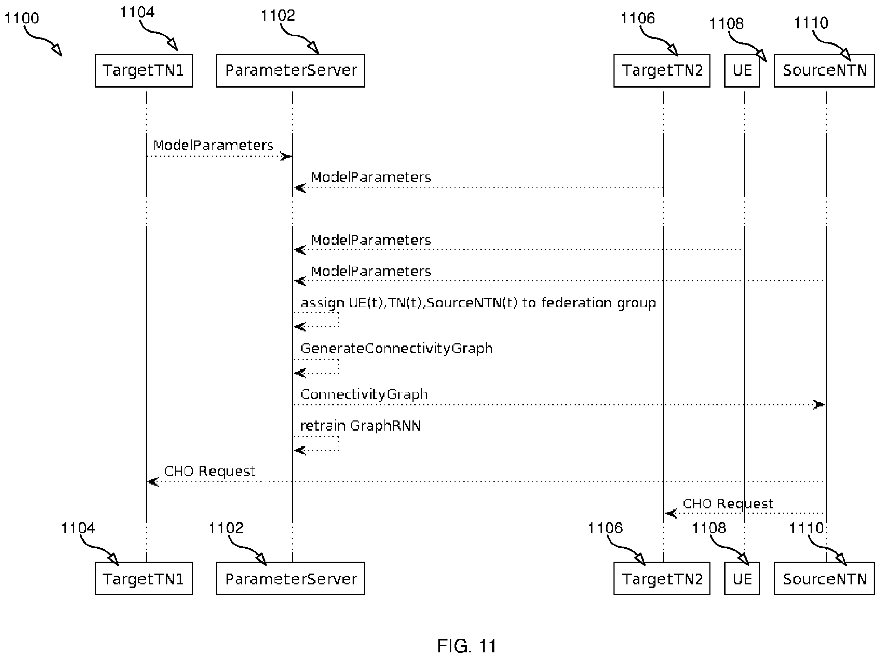

FIG. 11 illustrates a sequence diagram 1100 showing model parameters that are learned with respect to prediction models in every network element that are shared with a parameter server 1102. The parameter server 1102 then selects the GraphRNN federation group and generates a connectivity graph using the selected federation model. In some aspects, a target TN1 1104 forwards model parameters to a parameter server 1102, as does a target TN2 1106. Further, in some aspects, a UE 1108 and source NTN 1110 forward model parameters to a parameter server 1102. A series of calculations are performed at the parameter server 1102 in order to generate a connectivity graph, send the connectivity graph to a source NTN 1110, and then retrain the graphRNN. After the graphRNN has been retrained, a CHO request is sent from the source NTN 1110 to the target TN1 1104 and the target TN2 1106.

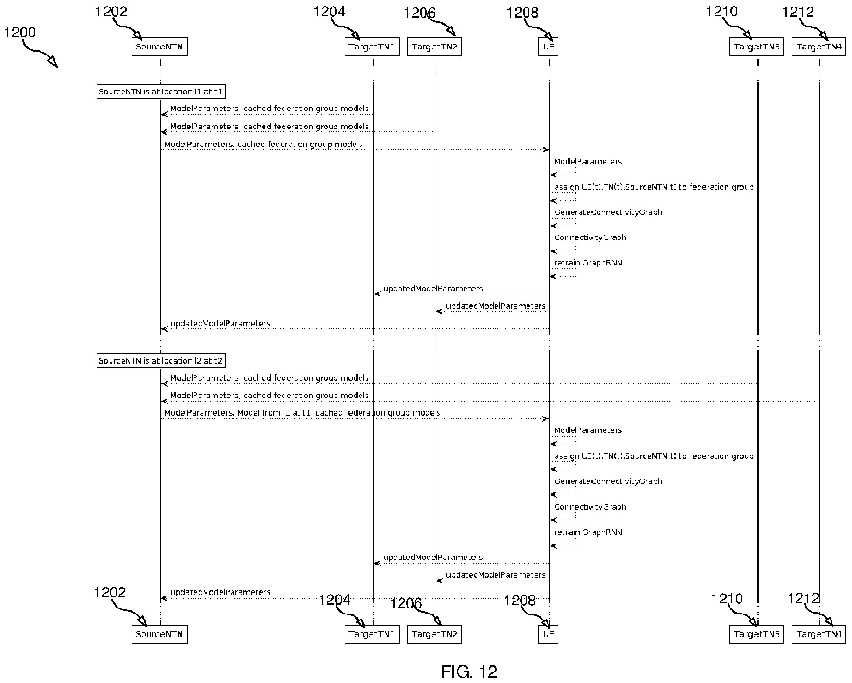

FIG. 12 illustrates a sequence diagram 1200 that depicts the tasks needed to be performed periodically as a satellite (source NTN 1202) orbits, which can carry a model to other locations at different points in time. Essentially, in some aspects, FIG. 12 illustrates the steps needed to be performed to generate an ML-model using federated learning, when the source NTN 1202 is at different locations. In some aspects, when source NTN 1202 is at a location 1 (11) at time 1 (t1), model parameters are sent to the source NTN 1202 from target networks TN1 and Tn2, 1204, 1206. In other aspects, when source NTN 1202 is at location 2 (12) at time 2 (t2), model parameters are sent to the source NTN 1202 from target networks TN3 and TN4 1210, 1212. At either location and time, the source NTN 1202 then sends model parameters to a UE 1208, at which a series of calculations are performed to generate a connectivity graph and retrain graphRNN. The UE 1208 then sends updated model parameters the targets TN1, TN2 1204, 1206. It additionally sends updated model parameters to the source NTN 1202 at either time and location. This process is repeated, in some aspects, across a variety of locations and times with a variety of target networks for a source NTN 1202. In this way, the ML model may be trained using federated learning, according to some aspects.

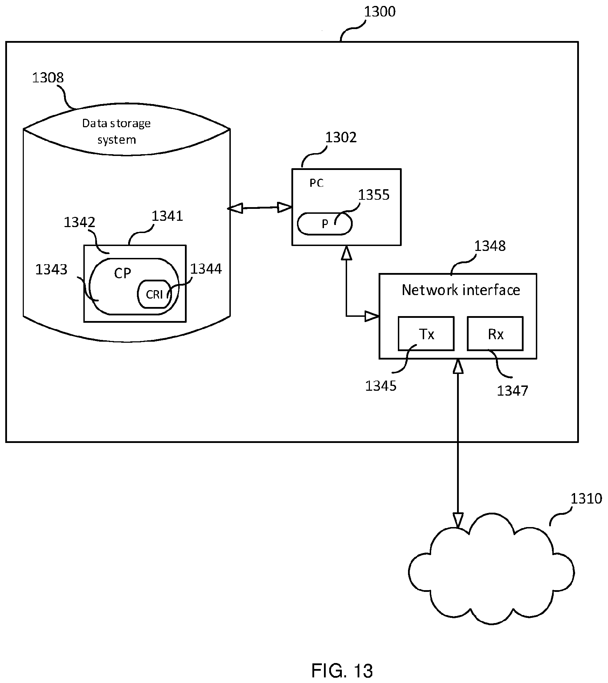

FIG. 13 is a block diagram of an apparatus 1300 (e.g., a connected device), according to some aspects. As shown in FIG. 13, the apparatus may comprise: processing circuitry (PC) 1302, which may include one or more processors (P) 1355 (e.g., a general purpose microprocessor and/or one or more other processors, such as an application specific integrated circuit (ASIC), field-programmable gate arrays (FPGAs), and the like); a network interface 1348 comprising a transmitter (Tx) 1345 and a receiver (Rx) 1347 for enabling the apparatus to transmit data to and receive data from other computing devices connected to a network 1310 (e.g., an Internet Protocol (IP) network) to which network interface 1348 is connected; and a local storage unit (a.k.a., "data storage system") 1308, which may include one or more nonvolatile storage devices and/or one or more volatile storage devices. In aspects where PC 1302 includes a programmable processor, a computer program product (CPP) 1341 may be provided. CPP 1341 includes a computer readable medium (CRM) 1342 storing a computer program (CP) 1343 comprising computer readable instructions (CRI) 1344. CRM 1342 may be a non-transitory computer readable medium, such as, magnetic media (e.g., a hard disk), optical media, memory devices (e.g., random access memory, flash memory), and the like. In some aspects, the CRI 1344 of computer program 1343 is configured such that when executed by PC 1302, the CRI causes the apparatus to perform steps described herein (e.g., steps described herein with reference to the flow charts). In other aspects, the apparatus may be configured to perform steps described herein without the need for code. That is, for example, PC 1302 may consist merely of one or more ASICs. Hence, the features of the aspects described herein may be implemented in hardware and/or software.

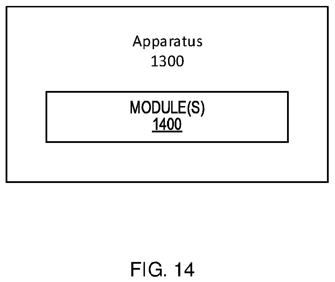

FIG. 14 is a schematic block diagram of the apparatus 1300 according to some other aspects. The apparatus 1300 includes one or more modules 1400, each of which is implemented in software. The module(s) 1400 provide the functionality of apparatus 1300 described herein (e.g., the steps herein).

While various aspects of the present disclosure are described herein, it should be understood that they have been presented by way of example only, and not limitation. Thus, the breadth and scope of the present disclosure should not be limited by any of the above-described exemplary aspects.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

**Claims**

1. A method (200) for a distributed machine learning, ML, assisted conditional handover, CHO, procedure for a connected device, the method comprising:

   receiving, by the connected device, one or more measurement configurations from a source station (202), wherein the source station is a non-terrestrial network, NTN;
   transmitting, by the connected device, one or more measurement reports to the source station (204);
   receiving and storing, by the connected device, one or more CHO commands from the source station, the one or more CHO commands having at least one triggering condition for CHO to one or more candidate target cells (206), wherein the one or more candidate target cells are terrestrial networks, TNs,
   wherein the one or more CHO commands are determined by inputting the one or more measurement reports into a distributed ML-generated reference model; and
   evaluating, by the connected device, whether the at least one triggering condition in any of the one or more CHO commands is fulfilled (208), wherein the distributed ML-generated reference model is generated by:

      collecting data for a set of device and network node agents (302),
      wherein the collected data include attribute information for at least one connected device used for training, attribute information for at least one non-terrestrial network, NTN, and attribute information for at least one terrestrial network, TN;
      building, using the attribute information from the collected data, dependency graphs representing interaction relationships between the set of device and network node agents (304);
      constructing, using the dependency graphs, graph-based ML models representing profiles for the set of device and network node agents (306),
      wherein constructing the graph-based ML models includes generating connectivity between the set of device and network node agents; and
      training and validating the graph-based ML models using the generated connectivity for the set of device and network node agents (308)

2. The method of claim 1, further comprising executing, by the connected device, a decision for handover based on the evaluation,
   wherein the connected device executes the handover if the one or more CHO commands is fulfilled and does not execute the handover if the one or more CHO commands is not fulfilled.

3. The method of claim 1 or 2, wherein the data for the set of device and network node agents comprises one or more of:

   the cost of the at least one training device being connected to the at least one NTN;
   the cost of the at least one training device being connected to the at least one TN;
   the service and application usage time by the at least one training device within a next time interval, T;
   the throughput and latency requirements of a predicted service in the at least one training device; and
   the conditions of at least one of the networks available to the at least one training device.

4. The method of claim 3, wherein the attribute information for the cost of the at least one connected device for training being connected to the at least one NTN comprises one or more of:

   the previous cost of service for all available NTNs;
   the time when the previous service occurred; and

the total power consumption of the at least one connected device for training and the at least one NTN during service.

5. The method of any one of claims 3-4, wherein the attribute information for the cost of the at least one connected device for training being connected to the at least one TN comprises one or more of:

the previous cost of service for all available TNs;
the time when the previous service occurred; and
the total power consumption of the at least one connected device for training and the at least one TN during service.

6. The method of any one of claims 3-5, wherein the attribute information for the service and application usage time by the at least connected device for training within the next time interval, T, comprises one or more of:

the type of service being used in the at least one training device;
the time of usage; and
the historical behavior of users of the at least one training device.

7. The method of any one of claims 3-6, wherein the attribute information for the throughput and latency requirements of the predicted service in the at least one connected device for training comprises one or more of:

the location of the at least one connected device for training;
the speed at which the at least connected device for training is moving; and
the historical mobility trajectory of the at least connected device for training.

8. The method of any one of claims 3-7, wherein the attribute information for the conditions of the at least one of the networks available to the at least connected device for training comprises one or more of:

the proximity of all potential satellites in the at least one network;
the available radio network deployment topology from the at least one network's knowledge base;
the propagation conditions of the at least one network;
the downlink signal-to-interference-plus-noise ratio as a function of time for the at least one network;
the system load on the at least one network;
the number of radio link failure, RLF, events in the at least one network;
the historical and current handover failure, HOF, events in the at least one network;
the historical and current ping-pong rate in the at least one network;
the historical average time in outage of the at least one network;
the predicted coverage of the at least one network's TN's per time slot;
the historical availability of TNs and NTNs in the at least one network;
the availability of TNs and NTNs in the at least one network in the past per timeslot at a given geo-location and predicted availability in a plurality of future time intervals; and
the current and previous TN names and NTN names and elevations in the at least one network.

9. The method of any one of claims 1-8, wherein the collected data further include data collected by a collaborative machine learning method.

10. The method of any one of claims 1-9 wherein the graph-based ML models are generated according to:

$$G_i(A_i, F_i)$$

where:

$A_i$ refers to an adjacency matrix (nxn), in the case of n nodes, where $n \in \{NTN, TN, UE\}$, and
$F_i$ is the feature vector for graph i.

11. The method of any one of claims 1-10, wherein the connected device is a user equipment, UE.

12. The method of any one of claims 1-11, wherein the at least one or more CHO commands includes at least one of:

a leaving condition,
a target cell identity, ID,
a life timer,
a CHO command priority, and
a CHO command ID.

13. A connected device (1300) comprising:

processing circuitry (1302); and
a memory (1342), said memory (1342) containing instructions executable by said processing circuitry (1302), whereby said connected device (1300) is operative to perform the method of any one of claims 1-12.

14. The connected device of claim 13, wherein the connected device is a user equipment, UE, or wherein the connected device is any device selected from a group consisting of: a sensor, a ground vehicle, an aircraft, or a watercraft, wherein the selected device has connectivity capabilities to both terrestrial and non-terrestrial networks.

**Patentansprüche**

1. Verfahren (200) für ein durch verteiltes maschinelles Lernen, ML, unterstütztes bedingtes Übergabe-, CHO-,

Verfahren für eine angeschlossene Vorrichtung, wobei das Verfahren umfasst
Empfangen, durch die angeschlossene Vorrichtung, einer oder mehrerer Messkonfigurationen von einer Quellstation (202), wobei die Quellstation ein nicht-terrestrisches Netzwerk, NTN, ist;
Übertragen, durch die angeschlossene Vorrichtung, eines oder mehrerer Messberichte an die Quellstation (204);
Empfangen und Speichern, durch die angeschlossene Vorrichtung, eines oder mehrerer CHO-Befehle von der Quellstation, wobei der eine oder die mehreren CHO-Befehle mindestens eine Auslösebedingung für CHO an eine oder mehrere Kandidaten-Zielzellen aufweisen (206),
wobei die eine oder mehreren Kandidaten-Zielzellen terrestrische Netzwerke, TNs, sind,
wobei der eine oder die mehreren CHO-Befehle durch Eingeben des einen oder der mehreren Messberichte in ein verteiltes ML-generiertes Referenzmodell bestimmt werden; und
Bewerten, durch die angeschlossene Vorrichtung, ob die mindestens eine Auslösebedingung in einem beliebigen von dem einen oder den mehreren CHO-Befehlen erfüllt ist (208), wobei das verteilte ML-generierte Referenzmodell generiert wird durch:

Sammeln von Daten für einen Satz von Vorrichtungs- und Netzwerkknotenagenten (302),
wobei die gesammelten Daten Attributinformationen für mindestens eine für das Training verwendete angeschlossene Vorrichtung, Attributinformationen für mindestens ein nicht-terrestrisches Netzwerk, NTN, und Attributinformationen für mindestens ein terrestrisches Netzwerk, TN, beinhalten;

Aufbauen von Abhängigkeitsgraphen unter Verwendung der Attributinformationen aus den gesammelten Daten, die Interaktionsbeziehungen zwischen dem Satz von Vorrichtungs- und Netzwerkknotenagenten darstellen (304);
Erstellen von graphbasierten ML-Modellen unter Verwendung der Abhängigkeitsgraphen, die Profile für den Satz von Vorrichtungs- und Netzwerkknotenagenten darstellen (306),
wobei Erstellen der graphbasierten ML-Modelle Generieren einer Konnektivität zwischen dem Satz von Vorrichtungs- und Netzwerkknotenagenten beinhaltet; und
Trainieren und Validieren der graphbasierten ML-Modelle unter Verwendung der generierten Konnektivität für den Satz von Vorrichtungs- und Netzwerkknotenagenten (308)

2. Verfahren nach Anspruch 1, weiter umfassend Ausführen einer Entscheidung zur Übergabe durch die angeschlossene Vorrichtung basierend auf der Bewertung,
wobei die angeschlossene Vorrichtung die Übergabe ausführt, wenn der eine oder die mehreren CHO-Befehle erfüllt sind, und die Übergabe nicht durchführt, wenn der eine oder die mehreren CHO-Befehle nicht erfüllt sind.

3. Verfahren nach Anspruch 1 oder 2, wobei die Daten für den Satz von Vorrichtungs- und Netzwerkknotenagenten eines oder mehrere umfassen von:

den Kosten der mindestens einen Trainingsvorrichtung, die mit dem mindestens einem NTN verbunden ist;

den Kosten der mindestens einen Trainingsvorrichtung, die mit dem mindestens einem TN verbunden ist;

der Dienst- und Anwendungsnutzungsdauer durch die mindestens eine Trainingsvorrichtung innerhalb eines nächsten Zeitintervalls, T;

den Durchsatz- und Latenzanforderungen eines vorhergesagten Dienstes in der mindestens einem Trainingsvorrichtung; und

den Bedingungen mindestens eines der Netzwerke, die der mindestens einen Trainingsvorrichtung zur Verfügung stehen.

4.  Verfahren nach Anspruch 3, wobei die Attributinformationen für die Kosten der mindestens einen angeschlossenen Vorrichtung zum Trainieren, die mit dem mindestens einen NTN verbunden ist, eines oder mehrere umfassen von:

den vorherigen Dienstkosten für alle verfügbaren NTNs;

dem Zeitpunkt, an dem der vorherige Dienst stattgefunden hat; und

dem Gesamtleistungsverbrauch der mindestens einen angeschlossenen Vorrichtung zum Trainieren und des mindestens einen NTN während des Diensts.

5.  Verfahren nach einem der Ansprüche 3-4, wobei die Attributinformationen für die Kosten der mindestens einen angeschlossenen Vorrichtung zum Trainieren, die mit dem mindestens einen TN verbunden ist, eines oder mehrere umfassen von:

den vorherigen Dienstkosten für alle verfügbaren TNs;

dem Zeitpunkt, an dem der vorherige Dienst stattgefunden hat; und

dem Gesamtleistungsverbrauch der mindestens einen angeschlossenen Vorrichtung zum Trainieren und des mindestens einen TN während des Diensts.

6.  Verfahren nach einem der Ansprüche 3-5, wobei die Attributinformationen für die Dienst- und Anwendungsnutzungsdauer durch die mindestens eine angeschlossene Vorrichtung zum Trainieren innerhalb des nächsten Zeitintervalls T eines oder mehrere umfassen von:

der Art des Dienstes, der in der mindestens einen Trainingsvorrichtung verwendet wird;

der Nutzungsdauer; und

dem historischen Verhalten von Nutzern der mindestens einen Trainingsvorrichtung.

7.  Verfahren nach einem der Ansprüche 3-6, wobei die Attributinformationen für die Durchsatz- und Latenzanforderungen des vorhergesagten Dienstes in der mindestens einen angeschlossenen Vorrichtung zum Trainieren eines oder mehrere umfassen von:

dem Standort der mindestens einen angeschlossenen Vorrichtung zum Trainieren;

der Geschwindigkeit, mit der sich die mindestens eine angeschlossene Vorrichtung zum Trainieren bewegt; und

der historischen Mobilitätsbewegungsbahn der mindestens einen angeschlossenen Vorrichtung zum Trainieren.

8.  Verfahren nach einem der Ansprüche 3-7, wobei die Attributinformationen für die Bedingungen des mindestens einen der Netzwerke, die für die mindestens eine angeschlossene Vorrichtung zum Trainieren verfügbar ist, eines oder mehrere umfassen von:

der Nähe aller potenziellen Satelliten in dem mindestens einen Netzwerk;

der verfügbaren Funknetz-Bereitstellungstopologie aus der Wissensdatenbank des mindestens einen Netzwerks;

den Ausbreitungsbedingungen des mindestens einen Netzwerks;

dem Downlink-Signal-zu-Interferenz-plus-Rausch-Verhältnis in Abhängigkeit von Zeit für das mindestens eine Netzwerk;

der Systemlast auf dem mindestens einen Netzwerk;

der Anzahl an Funkverbindungsausfall-, RLF-, Ereignissen in dem mindestens einen Netzwerk;

den historischen und aktuellen Übergabefehler-, HOF-, Ereignissen in dem mindestens einen Netzwerk;

der historischen und aktuellen Ping-Pong-Rate in dem mindestens einen Netzwerk;

der historischen durchschnittlichen Ausfallzeit des mindestens einen Netzwerks;

der vorhergesagten Abdeckung des mindestens einen TN-Netzwerks je Zeitfenster;

der historischen Verfügbarkeit von TNs und NTNs in dem mindestens einen Netzwerk;

der Verfügbarkeit von TNs und NTNs in dem mindestens einen Netzwerk in der Vergangenheit je Zeitfenster an einer gegebenen Geolokalisierung und der vorhergesagten Verfügbarkeit in einer Vielzahl künftiger Zeitintervalle; und

den aktuellen und vorherigen TN-Namen und NTN-Namen und Höhen in dem mindestens einen Netzwerk.

9. Verfahren nach einem der Ansprüche 1-8, wobei die gesammelten Daten weiter Daten beinhalten, die durch ein kollaboratives maschinelles Lernverfahren gesammelt worden sind.

10. Verfahren nach einem der Ansprüche 1-9, wobei die graphbasierten ML-Modelle generiert werden gemäß:

$$G_i(A_i, F_i)$$

wobei:

$A_i$ eine Adjazenzmatrix (nxn) im Falle von n Knoten bezeichnet, wobei $nE\{NTN, TN, UE\}$, und
$F_i$ der Merkmalsvektor für Graph i ist.

11. Verfahren nach einem der Ansprüche 1-10, wobei die angeschlossene Vorrichtung eine Benutzerausrüstung, UE, ist.

12. Verfahren nach einem der Ansprüche 1-11, wobei der mindestens eine oder mehrere CHO-Befehle mindestens eines beinhalten von:

einer Austrittsbedingung,
einer Zielzellenidentität, ID,
einem Lebenszeitgeber,
einer CHO-Befehlspriorität, und
einer CHO-Befehls-ID.

13. Angeschlossene Vorrichtung (1300), umfassend:

Verarbeitungsschaltung (1302); und
einen Speicher (1342), wobei der Speicher (1342) Anweisungen enthält, die durch die Verarbeitungsschaltung (1302) ausführbar sind, wodurch die angeschlossene Vorrichtung (1300) betreibbar ist, um das Verfahren nach einem der Ansprüche 1-12 durchzuführen.

14. Angeschlossene Vorrichtung nach Anspruch 13, wobei die angeschlossene Vorrichtung eine Benutzerausrüstung, UE, ist
oder wobei die angeschlossene Vorrichtung eine beliebige Vorrichtung ist, die aus einer Gruppe ausgewählt ist, bestehend aus: einem Sensor, einem Bodenfahrzeug, einem Flugzeug oder einem Wasserfahrzeug, wobei die ausgewählte Vorrichtung Konnektivitätsfunktionen zu sowohl terrestrischen als auch nicht-terrestrischen Netzwerken aufweist.

**Revendications**

1. Procédé (200) pour une procédure de transfert intercellulaire conditionnel, CHO, assisté par apprentissage automatique, ML, distribué,

pour un dispositif connecté, le procédé comprenant
la réception, par le dispositif connecté, d'une ou plusieurs configurations de mesure depuis une station source (202), dans lequel la station source est un réseau non terrestre, NTN ;
la transmission, par le dispositif connecté, d'un ou plusieurs rapports de mesure à la station source (204) ;
la réception et le stockage, par le dispositif connecté, d'une ou plusieurs commandes CHO provenant de la station source, les une ou plusieurs commandes CHO présentant au moins une condition de déclenchement pour CHO vers une ou plusieurs cellules cibles candidates (206),
dans lequel les une ou plusieurs cellules cibles candidates sont des réseaux terrestres, TN,
dans lequel les une ou plusieurs commandes CHO sont déterminées par l'entrée des un ou plusieurs rapports de mesure dans un modèle de référence généré par ML distribué ; et
l'évaluation, par le dispositif connecté, si l'au moins une condition de déclenchement dans l'une quelconque des une ou plusieurs commandes CHO est remplie (208), dans lequel le modèle de référence généré par ML distribué est généré par :

la collecte de données pour un ensemble d'agents de nœud de réseau et de dispositif (302), dans lequel les données collectées incluent des informations d'attribut pour au moins un dispositif connecté utilisé pour l'entraînement, des informations d'attribut pour au moins un réseau non terrestre, NTN, et des informations d'attribut pour au moins un réseau terrestre, TN ;

la construction, à l'aide des informations d'attribut des données collectées, de graphes de dépendance représentant des relations d'interaction entre l'ensemble d'agents de nœud de réseau et de dispositif (304) ; la construction, à l'aide des graphes de dépendance, de modèles ML basés sur des graphes représentant des profils de l'ensemble d'agents de nœud de réseau et de dispositif (306), dans lequel la construction des modèles ML basés sur des graphes inclut la génération de connectivité entre l'ensemble d'agents de nœud de réseau et de dispositif ; et l'entraînement et la validation des modèles ML basés sur des graphes à l'aide de la connectivité générée pour l'ensemble d'agents de nœud de réseau et de dispositif (308).

2. Procédé selon la revendication 1, comprenant en outre l'exécution, par le dispositif connecté, d'une décision de transfert intercellulaire sur la base de l'évaluation,
dans lequel le dispositif connecté exécute le transfert intercellulaire si les une ou plusieurs commandes CHO sont satisfaites et n'exécute pas le transfert intercellulaire si les une ou plusieurs commandes CHO ne sont pas satisfaites.

3. Procédé selon la revendication 1 ou 2, dans lequel les données pour l'ensemble d'agents de nœud de réseau et de dispositif comprennent un ou plusieurs parmi :

le coût de l'au moins un dispositif d'entraînement étant connecté à l'au moins un NTN ;
le coût de l'au moins un dispositif d'entraînement étant connecté à l'au moins un TN;
le temps d'utilisation du service et de l'application par l'au moins un dispositif d'entraînement au cours d'un prochain intervalle de temps, T ;
les exigences de débit et de latence d'un service prévu sur l'au moins un dispositif d'entraînement ; et
les conditions d'au moins un des réseaux disponibles pour l'au moins un dispositif d'entraînement.

4. Procédé selon la revendication 3, dans lequel les informations d'attribut relatives au coût de l'au moins un dispositif connecté pour l'entraînement étant connecté à l'au moins un NTN comprennent un ou plusieurs parmi :

le coût de service précédent pour tous les NTN disponibles ;
l'heure à laquelle le service précédent a eu lieu ; et
la consommation d'énergie totale de l'au moins un dispositif connecté pour l'entraînement et de l'au moins un NTN pendant le service.

5. Procédé selon l'une quelconque des revendications 3-4, dans lequel les informations d'attribut relatives au coût de l'au moins un dispositif connecté pour l'entraînement étant connecté à l'au moins un TN comprennent un ou plusieurs parmi :

le coût de service précédent pour tous les TN disponibles ;
l'heure à laquelle le service précédent a eu lieu ; et
la consommation d'énergie totale de l'au moins un dispositif connecté pour l'entraînement et de l'au moins un TN pendant le service.

6. Procédé selon l'une quelconque des revendications 3-5, dans lequel les informations d'attribut relatives au service et à la durée d'utilisation de l'application par l'au moins un dispositif connecté pour l'entraînement au cours du prochain intervalle de temps, T, comprennent un ou plusieurs parmi :

le type de service utilisé dans l'au moins un dispositif d'entraînement ;
le temps d'utilisation ; et
le comportement historique d'utilisateurs de l'au moins un dispositif d'entraînement.

**7.** Procédé selon l'une quelconque des revendications 3-6, dans lequel les informations d'attribut relatives aux exigences de débit et de latence du service prévu dans l'au moins un dispositif connecté pour l'entraînement comprennent un ou plusieurs parmi :

l'emplacement de l'au moins un dispositif connecté pour l'entraînement ;
la vitesse à laquelle se déplace l'au moins un dispositif connecté pour l'entraînement ; et
la trajectoire de mobilité historique de l'au moins un dispositif connecté pour l'entraînement.

**8.** Procédé selon l'une quelconque des revendications 3-7, dans lequel les informations d'attribut relatives aux conditions de l'au moins un des réseaux disponibles pour l'au moins un dispositif connecté pour l'entraînement comprennent un ou plusieurs parmi :

la proximité de tous les satellites potentiels dans l'au moins un réseau ;
la topologie de déploiement du réseau radio disponible provenant de la base de connaissances de l'au moins un réseau ;
les conditions de propagation de l'au moins un réseau ;
le rapport signal sur interférence plus bruit en liaison descendante en fonction du temps pour l'au moins un réseau ;
la charge système sur l'au moins un réseau ;
le nombre d'événements de défaillance de liaison radio, RLF, dans l'au moins un réseau ;
les événements historiques et actuels de défaillance de transfert intercellulaire, HOF, dans l'au moins un réseau ;
le taux historique et actuel de ping-pong dans l'au moins un réseau ;
la durée moyenne historique d'indisponibilité de l'au moins un réseau ;
la couverture prévue des TN de l'au moins un réseau par créneau horaire ;
la disponibilité historique des TN et des NTN dans l'au moins un réseau ;
la disponibilité des TN et des NTN dans l'au moins un réseau dans le passé par créneau horaire à une géolocalisation donnée et la disponibilité prévue dans une pluralité d'intervalles de temps futurs ; et
les noms et élévations de TN et NTN actuels et précédents dans l'au moins un réseau.

**9.** Procédé selon l'une quelconque des revendications 1-8, dans lequel les données collectées incluent en outre des données collectées par un procédé d'apprentissage automatique collaboratif.

**10.** Procédé selon l'une quelconque des revendications 1-9, dans lequel les modèles ML basés sur des graphes sont générés selon :

$$G_i(A_i, F_i)$$

où :

$A_i$ fait référence à une matrice d'adjacence (nxn), dans le cas de n nœuds, où $n \in \{NTN, TN, UE\}$, et
$F_i$ est le vecteur de caractéristiques du graphe i.

**11.** Procédé selon l'une quelconque des revendications 1-10, dans lequel le dispositif connecté est un équipement utilisateur, UE.

**12.** Procédé selon l'une quelconque des revendications 1-11, dans lequel les au moins une ou plusieurs commandes CHO incluent au moins une parmi :

une condition de départ,
une identité, ID, de cellule cible,
une minuterie de durée de vie,
une priorité de commande CHO, et
une ID de commande CHO.

**13.** Dispositif connecté (1300) comprenant :

une circuiterie de traitement (1302) ; et
une mémoire (1342), ladite mémoire (1342) contenant des instructions exécutables par ladite circuiterie de traitement (1302), selon lesquelles ledit dispositif connecté (1300) est opérationnel pour réaliser le procédé selon l'une quelconque des revendications 1-12.

**14.** Dispositif connecté selon la revendication 13, dans lequel le dispositif connecté est un équipement utilisateur, UE, ou dans lequel le dispositif connecté est un dispositif choisi parmi : un capteur, un véhicule terrestre, un aéronef et une embarcation, dans lequel le dispositif choisi présente des capacités de connectivité aux réseaux terrestres et non terrestres.

FIG. 1

200

202 — receiving, by the connected device, one or more measurement configurations from a source station

204 — transmitting, by the connected device, one or more measurement reports to the source station

206 — receiving and storing, by the connected device, one or more conditional handover (CHO) commands from the source station, the one or more CHO commands having at least one triggering condition for CHO to one or more candidate target cells, wherein the one or more CHO commands are determined by inputting the one or more measurement reports into a distributed machine learning-generated reference model

208 — evaluating, by the connected device, whether the at least one triggering condition in any of the one or more CHO commands is fulfilled

FIG. 2

300

302 collecting data for a set of device and network node agents, wherein the collected data include attribute information for at least one connected device used for training, attribute information for at least one non-terrestrial network (NTN), and attribute information for at least one terrestrial network (TN)

304 building, using the attribute information from the collected data, dependency graphs representing interaction relationships between the set of device and network node agents;

306 constructing, using the dependency graphs, graph-based ML models representing profiles for the set of device and network node agents, wherein constructing the graph-based ML models includes generating connectivity between the set of device and network node agents

308 training and validating the graph-based ML models using the generated connectivity for the set of device and network node agents

FIG. 3

400

402

404

NTNAvailability

TNAvailability

408

406

NetworkCondition

AppType

414

410

412

UEThroughput

UELatency

UELocation

416

QoE

418

AppUsageTime

420

Cost

FIG. 4

| | UE | TN | NTN |
|---|---|---|---|
| | Cost of service | | |
| | | Serving hour | |
| | Service/application usage time | | |
| | Service type | | |
| | Time of usage | | |
| | User application interaction | | |
| | Throughput and latency requirements | | |
| | Location, speed, and trajectory of UE | | |
| | | | Satellite trajectory |
| | | Network conditions (load, topology, propagation conditions, DL SINR, RLF, HOF, PP rate, Outage, Coverage, Availability | |

FIG. 5

EP 4 476 936 B1

FIG. 6

700

Start of sequence

End of sequence

UE

UE

UE

UE

A

B    A

B   C   A

|  | UE |
|----|----|

UE  1

702

| | UE | A |
|---|----|---|

| UE | 1 | 1 |
| A | 1 | 1 |

704

| | UE | 1 | B |
|---|----|---|---|

| UE | 1 | 1 | 1 |
| A | 1 | 1 | 0 |
| B | 1 | 0 | 1 |

706

| | UE | A | B | C |
|---|----|---|---|---|

| UE | 1 | 1 | 1 | 1 |
| A | 1 | 1 | 0 | 0 |
| B | 1 | 0 | 1 | 0 |
| C | 1 | 0 | 0 | 1 |

708

FIG. 7

FIG. 8

EP 4 476 936 B1

900

904

SourceNTN

902

UE

906

TargetTN1

908

TargetTN2

908

TN2

MeasurementConfig

MeasurementReports

PeriodicPredictionModelInference(t)

UEQualityDegradationIsPredicted(t,t+T)

GenerateConnectivityGraph(t)

CHO Request

CHO Request

ACK

ACK

CHO CommandTN1

CHO CommandTN2

CriteriaMet

Connect

CHO Notification

904

Packet Forward

902

906

908

908

SourceNTN

UE

TargetTN1

TargetTN2

TN2

FIG. 9

FIG. 10

FIG. 11

FIG. 12

FIG. 13

Apparatus
1300

MODULE(S)
1400

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2021118418 A1

**Non-patent literature cited in the description**

• **E. JUAN** ; **M. LAURIDSEN** ; **J. WIGARD** ; **P. E. MOGENSEN**. 5G New Radio Mobility Performance in LEO-based Non-Terrestrial Networks. *2020 IEEE Globecom Workshops*, 2020, 1-6